# EUROPÄISCHE PATENTANMELDUNG

(11) **EP 1 484 661 A1**
(43) Veröffentlichungstag der Anmeldung: **08.12.2004**
(21) Anmeldenummer: 03012890.4
(22) Anmeldetag: 06.06.2003
(51) Int. Cl.: G05G 5/03, A63H 19/24, H01H 19/10, G01D 5/00

(54) **Inkrementaldrehsteller mit dynamischem Anschlag**

(71) Anmelder: Lenz Elektronik GmbH, 35398 Giessen (DE)
(72) Erfinder: Lenz, Bernd, 35398 Giessen (DE)
(74) Vertreter: Lippert, Hans, Dipl.-Ing.

(57) **Zusammenfassung**

Inkrementaldrehgeber mit einer drehbaren Welle (10) und einer mit der Welle zusammenwirkenden Impulserzeugungseinrichtung (12), die beim Drehen der Welle elektrische Impulse liefert, aufweisend eine mit der Welle zusammenwirkende Blockiereinrichtung (2), die durch ein ihr zuführbares elektrisches Signal in einen aktiven Zustand bringbar ist, in welchem sie eine Weiterdrehung der Welle blokkiert. Für Modelleisenbahnanlage.

## Beschreibung

In der Technik wird die Einstellung von z.B. Lautstärke eines Lautsprechers oder Geschwindigkeit eines Motors häufig mit Potentiometern vorgenommen. Diese Potentiometer arbeiten absolut, d.h. eine bestimmte Stellung des Potentiometers entspricht einer bestimmten Lautstärke oder einer bestimmten Geschwindigkeit. Linker Anschlag ist in der Regel die minimale, rechter Anschlag die maximale Einstellung.

Diese absolute Stellung ist allerdings in gewissen Fällen von erheblichem Nachteil, und zwar immer dann, wenn das selbe Potentiometer nacheinander für verschiedene Stellaufgaben genutzt werden soll.

Ein typisches Beispiel hierfür ist das folgende: In einer Modelleisenbahnanlage wird die Geschwindigkeit einer ersten Lokomotive mit einem Potentiometer eingestellt. Zu einem späteren Zeitpunkt soll mit dem selben Potentiometer die Steuerung einer anderen Lokomotive übernommen werden, die eine von der ersten Lok abweichende Geschwindigkeit hat. Zum Zeitpunkt der Übernahme der Steuerung hat das Potentiometer nicht die richtige Stellung für die Geschwindigkeit dieser zweiten Lok. Die Folge ist eine, je nach Abweichung der Potentiometerstellung, mehr oder weniger ruckartige Geschwindigkeitsveränderung der zweiten Lokomotive.

Alternativ kann, um diese Nachteile des Potentiometers zu umgehen, ein so genannter Inkrementaldrehgeber eingesetzt werden.

Inkrementaldrehgeber sind allgemein bekannt. In der Regel wird bei einer Drehung der Welle um ein vorgegebenes Drehwinkelausmaß ein Impuls erzeugt. Anstelle eines Impulses kann aber auch ein definierter Impulszug erzeugt und ausgegeben werden. Die Impulse können mit mechanisch arbeitenden Schaltern oder Kontakten erzeugt werden, die in an sich bekannter Weise in Abhängigkeit von der Drehung der Welle geschlossen und geöffnet werden. Es sind aber auch auf fotoelektrischer oder magnetischer Basis arbeitende Inkrementaldrehgeber bekannt.

Zum bidirektionalen Positionieren von Stellern oder Aktoren liefern die Inkrementaldrehgeber im allgemeinen drehrichtungsabhängige Impulse. Ein solcher Inkrementaldrehgeber hat in der Regel zwei Impulsausgänge, und zwar jeweils einen für jede Drehrichtung. Bidirektionelle Positionieraufgaben fallen beispielsweise bei der Steuerung oder Regelung der Drehzahl von Motoren, der Lautstärke von Lautsprechern, der Temperatur von Heizeinrichtungen, der Helligkeit von Lichtquellen und dergleichen an.

Die beim Drehen an der Welle eines Inkrementaldrehgebers erzeugten drehrichtungsabhängigen Impulse können genutzt werden, um bei dem oben erwähnten Anwendungsfall der Einstellung der Geschwindigkeit einer Modelleisenbahnlokomotive die Motorgeschwindigkeiten herauf- und herabzusetzen. Jeder Impuls erhöht bzw. erniedrigt je nach Drehrichtung die Geschwindigkeit des Motors. Entsprechend kann auch die Lautstärke eines Lautsprechers eingestellt werden.

Inkrementaldrehgeber arbeiten demgemäss relativ. Es gibt keinen festen Zusammenhang zwischen der Drehstellung der Welle des Drehgebers und einer einzustellenden Geschwindigkeit. Der oben beschriebene negative Effekt bei der Übernahme eines Geschwindigkeitswertes oder eines Wertes einer anderen einstellbaren Größe wie beispielsweise der Lautstärke tritt also nicht auf. Hierbei wird für jede Anwendung der mittels des Inkrementaldrehgebers veränderbare, gerade aktuelle Einstellwert in irgendeiner Form fest gehalten oder gespeichert.

Der Erfindung liegt die Aufgabe zugrunde, einen Inkrementaldrehgeber zu schaffen, der es einem Bediener ermöglicht, das Erreichen eines besonderen Einstellwertes zu erkennen.

Diese Aufgabe wird durch einen Inkrementaldrehgeber nach dem Gegenstand des Anspruchs 1 gelöst. Bevorzugte Weiterbildungen sind in den Unteransprüchen definiert.

Der Erfindung betrifft somit einen Inkrementaldrehgeber mit einer drehbaren Welle und einer mit der Welle zusammenwirkenden Impulserzeugungseinrichtung, die beim Drehen der Welle elektrische Impulse liefert. Eine mit der Welle zusammenwirkende Blockiereinrichtung ist durch ein ihr zuführbares elektrisches Signal in einen aktiven Zustand bringbar, in welchem sie eine Weiterdrehung der Welle blockiert.

Der erfindungsgemässe Inkrementaldrehgeber zeichnet sich mit anderen Worten durch einen dynamischen oder variablen Anschlag aus. Hierdurch kann der Nachteil der bekannten Inkrementalddrehgeber, dass sie dem Bediener keinen fühlbaren Anschlag, also keine taktile Rückmeldung über minimale- oder maximale Einstellung liefern, überwunden werden. Dies ist insbesondere bei der Geschwindigkeitssteuerung einer Modellbahnlokomotive von Vorteil, da dort eine taktile Rückmeldung wünschenswert ist, um ohne einen Blick auf den Geber zu werfen, die Null- oder Maximalstellung fühlen zu können. Die Erfindung eröffnet darüber hinaus auch die Möglichkeit, unabhängig vom Erreichen eines maximalen und minimalen Einstellwertes, eine Blockierung in Abhängigkeit vom Auftreten anderer Ereignisse auszulösen. So kann z.B. beim Durchfahren kritischer Gleisabschnitte einer Modelleisenbahnanlage eine Erhöhung der Geschwindigkeit bis zu einem sonst möglichen maximalen Einstellwert verhindert werden. Gleiches gilt sinngemäss auch für eine Verringerung des Wertes. Auch können so geplante Weichenstellungen und mögliche Kollisionen z.B. zwischen zwei hinter einander fahrenden Zügen berücksichtigt werden.

Der erfindungsgemässe Inkrementaldrehgeber vereint die Vorteile der beiden oben genannten Stellglieder, nämlich Potentiometer und herkömmlicher Inkrementaldrehgeber, unter Vermeidung deren Nachteile.

Bevorzugt wird bei der Anwendung Modelleisenbahn die Bewegung der Welle des Gebers dann blockiert, wenn von der kleinsten Geschwindigkeitsstufe auf die Geschwindigkeitsstufe "0" gegen den Uhrzeigersinn gedreht wird. Ist der Nullpunkt noch nicht erreicht, ist die Blockiereinrichtung nicht aktiv. Gleiches geschieht bei Änderung auf die maximale mögliche Geschwindigkeitsstufe in Richtung Uhrzeigersinn. Der Übergang von z.B. der kleinsten Geschwindigkeitsstufe auf die Geschwindigkeitsstufe "0" bzw. von einer gerade aktuellen Stufe auf eine nachfolgende kritische Stufe oder "Anschlagstufe" und umgekehrt kann durch Vergleich festgestellt werden. In Abhängigkeit vom Vergleichsergebnis wird der Anschlag aktiviert oder deaktiviert.

Ein solchermaßen mit variablem Anschlag versehener Drehgeber kann komfortabel sowohl als Geschwindigkeitssteller mit Anschlag als auch als "normaler" Drehgeber in einem anderen Kontext ohne Anschlag eingesetzt werden. Hierzu wird durch Tastendruck oder dergleichen eine Umschaltung der Inkrementaldrehgeberfunktion vorgenommen, um zum Beispiel die Nummer einer Lok auszuwählen oder einen Klangstufenbereich vorzugeben.

Die Blockiereinrichtung ist bevorzugt mechanisch so gestaltet, daß nur eine Wieterdrehung der Welle, jedoch nicht eine Drehung in entgegengesetzter Richtung blockiert wird, und die Blockiereinrichtung bei Drehung in entgegengesetzter Richtung in ihren inaktiven Zustand bringbar ist, in welchem Drehungen in beide Richtungen möglich sind. Hierzu kann zum Beispiel ein Zahnring mit asymmetrisch ausgebildeten Zähnen vorgesehen sein. Die Bockiereinrichtung weist bevorzugt einen an der Welle angreifenden mechanischen Anschlag auf, der z.B. in einen solchen Zahnring eingreift.

Die Blockiereinrichtung kann für die beiden Drehrichtungen gesonderte Blockiermittel, beispielsweise zwei Zahnringe, aufweisen.

Die Blockiereinrichtung ist bevorzugt elektromagnetisch aktivierbar.

Um das elektrische Signal für die Aktivierung der Blockiereinrichtung zu bilden, wird der gerade aktuelle Einstellwert herangezogen. Der aktuelle Einstellwert ist ein Absolutwert. Er hängt von den von der Impulserzeugungseinrichtung erzeugten Impulsen ab und kann direkt zur Steuerung einer physikalischen Größe, insbesondere einer Geschwindigkeit oder Lautstärke, benutzt werden. Durch Drehung des Inkrementaldrehgebers wird der Absolutwert der zu steuernden physikalischen Größe in bekannter Weise durch Aufsummieren oder Subtrahieren der vom Inkrementaldrehgeber erzeugten Impulse in einem Vor-/Rückwärtszähler oder dergleichen variiert. Zur Erzeugung des elektrischen Signals für die Blokkiereinrichtung wird der gerade aktuelle Zählerwert mit einem Referenzwert verglichen und bei Erreichen des Referenzwerts das elektrische Aktivierungssignal gebildet. Der Referenzwert kann ein fest vorgegebener gespeicherter Einstellwert sein oder auch ein Wert, der situationsbedingt durch einen Prozessor einer Anlage erzeugt und vorgegeben wird.

Bei einer bevorzugten Ausführung können sowohl der aktuelle Einstellwert als auch der oder die zugehörigen Referenzwerte über einen Datenbus zu einer dem Inkrementaldrehgeber zugeordneten Steuerschaltung übermittelt werden. Beim aktuellen Einstellwert kann es sich um einen Istwert, z.B. die aktuelle Geschwindigkeit einer geschwindigkeitsgeregelten Lokomotive handeln. Der aktuelle Einstellwert wird in den oben erwähnten Vor-/Rückwärtszähler geladen, und der oder die Referenzwerte werden in einer Speichereinrichtung abgelegt. Stimmt der mittels des Impulsdrehgebers im Vor-/Rückwärtszähler veränderte aktuelle Einstellwert (Istwert) mit dem oder einem der Referenzwerte in der Speichereinrichtung überein, aktiviert ein Vergleicher die Blockiereinrichtung. Bei Nichtübereinstimmung bleibt oder wird die Blockiereinrichtung deaktiviert. Über den Datenbus kann auch ein Sollwert in den Zähler geladen und über diesen verändert werden.

Bei den Einstell- und Referenzwerten handelt es sich vorzugsweise um dimensionslose Zahlenwerte, die kontinuierlich, jedoch vorzugsweise schrittweise veränderbar sind. So können beispielsweise ein Reihe von Geschwindigkeitsstufen 0, 1, 2, 3, ...... vorliegen.

Im Folgenden wird die Erfindung anhand von Zeichnungen näher erläutert. Es zeigen:
Fig. 1 eine schematische Seitenansicht eines Ausführungsbeispiels eines nach der Erfindung ausgebildeten Inkrementaldrehgebers,
Fig. 2 eine schematische Ansicht von unten auf eine beim Ausführungsbeispiel nach Fig. 1 vorgesehene Zahnscheibe, die eine Komponente einer nach der Erfindung vorgesehenen Blockiereinrichtung ist,
Fig. 3 eine schematische Seitenansicht der Blockiereinrichtung im inaktiven Zustand,
Fig. 4 eine schematische Seitenansicht der Blockiereinrichtung im aktiven Zustand, und
Fig. 5 ein schematisches Blockschaltbild eines Ausführungsbeispiels einer nach der Erfindung ausgebildeten Steuerschaltung zur Zusammenarbeit mit einem erfindungsgemäßen Inkrementaldrehgeber.

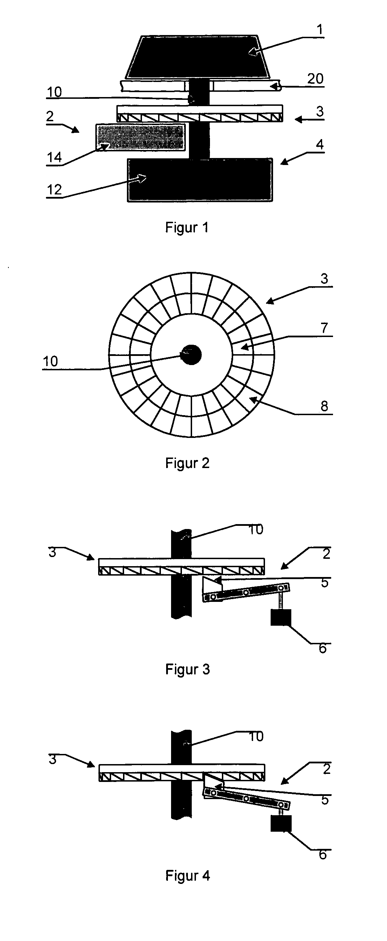

Ein in Fig. 1 bis 4 schematisch dargestelltes Ausführungsbeispiel eines Inkrementaldrehgebers 4 umfasst in an sich bekannter Weise eine Impulserzeugungseinrichtung 12, eine mit der Impulserzeugungseinrichtung 12 verbundene Welle 10 und einen an der Welle 10 angebrachten Drehknopf 1. Die Impulserzeugungseinrich-tung 12 ist derart ausgebildet, dass sie bei Drehung am Drehknopf 1 drehrichtungsabhängige Impulse zum bidirektionelen Positionierbetrieb liefert. Wie ebenfalls allgemein üblich, ist die Welle 10 zwischen der Impulserzeugungseinrichtung 12 und dem Drehknopf 1 durch eine Gehäusedurchführung 20 geführt.

Der Aufbau und die Funktionsweise des bis jetzt beschriebenen Inkrementaldrehgebers 4 gehören zum Stand der Technik und sind dem Fachmann bekannt.

Nach der Erfindung weist der Inkrementaldrehgeber 4 eine über den Stand der Technik hinausgehende Blockiereinrichtung 2 auf. Bei dem betrachteten Ausführungsbeispiel besteht die Blockiereinrichtung in Wesentlichen aus zwei Komponenten, nämlich einer Zahnscheibe 3 und einer mit der Zahnscheibe 3 zusammenwirkenden Einrückvorrichtung 14.

Wie es den Fig. 1 bis 4 im Einzelnen zu entnehmen ist, befindet sich auf der Welle 10 zusätzlich zu einer nicht dargestellten üblichen Impulsgeberscheibe der Impulserzeugungseinrichtung 12 eine weitere Scheibe, nämlich die oben angesprochene Zahnscheibe 3. In diese Scheibe sind, insbesondere unter Bezugnahme auf Fig. 2, zwei Zahnringe 7 und 8 eingeformt. Die Zähne der beiden Zahnringe sind nicht symmetrisch, sondern beim inneren Ring 7 nur mit Rechtssteigung und beim äußeren Ring 8 nur mit Linkssteigung ausgeführt.

In einer in Fig. 3 dargestellten Ruhestellung oder im inaktiven Zustand der Blokkiereinrichtung 2 kann über den Drehknopf 1 die Welle 10 in beide Richtungen unbegrenzt gedreht werden. Hierbei gibt die Impulserzeugungseinrichtung 12 pro Drehwinkeleinheit einen oder eine bestimmte Anzahl von Impulsen aus.

Dient der Inkrementaldrehgeber 4 in einem bestimmten Kontext der Geschwindigkeitseinstellung eines Fahrzeugs bzw. der Drehzahl eines elektrischen Fahrmotors, so wird nach Drehung gegen den Uhrzeigersinn beim Übergang von der kleinsten Geschwindigkeitsstufe auf die Stufe "0" (Stillstand) die Einrückvorrichtung 14 aktiv. Bei dem dargestellten Ausführungsbeispiel besteht die Einrückvorrichtung 14 im Wesentlichen aus einem Elektromagneten 6 und einem Riegel 5.

In der in Fig. 4 dargestellten Arbeitsstellung oder dem aktiven Zustand der Blokkiereinrichtung 2 ist der Elektromagnet 6 der Einrückvorrichtung 14 erregt und der zu den Zähnen des Zahnringes 8 passend abgeschrägte Riegel 5 ist in den äußeren Ring 8 der Zahnscheibe 3 eingerastet. Eine Weiterdrehung gegen den Uhrzeigersinn ist dadurch unterbunden; der gewünschte "Anschlag" ist erreicht.

Wird aus dieser Arbeitsstellung der Blockiereinrichtung 2 heraus der Drehknopf 1 im Uhrzeigersinn gedreht, so drückt die nur schwach steigende Flanke der Zähne des äußeren Zahnringes 8 den Riegel 5 gegen die Anziehungskraft des Magneten 6 nach unten. Gleichzeitig wird die Geschwindigkeitsstufe erhöht, so dass der Elektromagnet 6 nicht mehr erregt ist und der Riegel 5 in seine untere Stellung zurückfällt und dort bis zur nächsten Erregung des Magneten 6 bleibt. Dieses Zurückfallen des Riegels 5 kann unter Umständen durch den Einsatz einer nicht dargestellten Feder unterstützt werden.

Für den Übergang von der vorletzten zur höchsten Geschwindigkeitsstufe gilt sinngemäß das gleiche. Hierzu wird der innere Zahnring 7 eingesetzt, der zusammen mit einem nicht dargestellten zweiten elektromagnetisch betätigbaren Riegel eine zweite Blockiervorrichtung darstellt.

Bei der dargestellten Ausführungsform der Einrückeinrichtung 14 sind der Riegel 5 und ein Tauchkolben des Elektromagneten 6 über einen verschwenkbaren Hebel miteinander verbunden. Andere Ausführungsformen der Einrückeinrichtung stehen einem Fachmann ohne weiteres zu Verfügung.

Die Erfindung ist auch nicht auf die dargestellte Ausführungsform der Blockiereinrichtung beschränkt. So kann man beispielsweise ein einziges Zahnrad mit symmetrischer Aussenverzahnung und zwei in die Aussenverzahnung einrückbare Klinken vorsehen, von denen jeweils eine einer der beiden Drehrichtungen zugeordnet ist. Hierbei sind die Klinken derart angeordnet und ausgestaltet, dass sie im eingerückten Zustand in der ihnen jeweils zugeordneten Drehrichtung eine Weiterdrehung der Welle blockieren, jedoch eine Drehung in der entgegengesetzten Richtung zulassen. Weitere Ausführungsformen sind für einen Fachmann augenscheinlich.

Das dem Elektromagneten 6 zugeführte elektrische Signal zum Aktivieren der Einrückeinrichtung 14 wird in Abhängigkeit vom Erreichen einer Geschwindigkeitsstufe oder beim Übergang von einer zu einer nächsten Geschwindigkeitsstufe erzeugt. Hierbei ist die gerade aktuelle Geschwindigkeitsstufe im allgemeinen in einem vom Inkrementaldrehwertgeber ansteuerbaren Absolutwertgeber gespeichert, bei dem es sich beispielsweise um einen Vor-/Rückwärtszähler handeln kann.

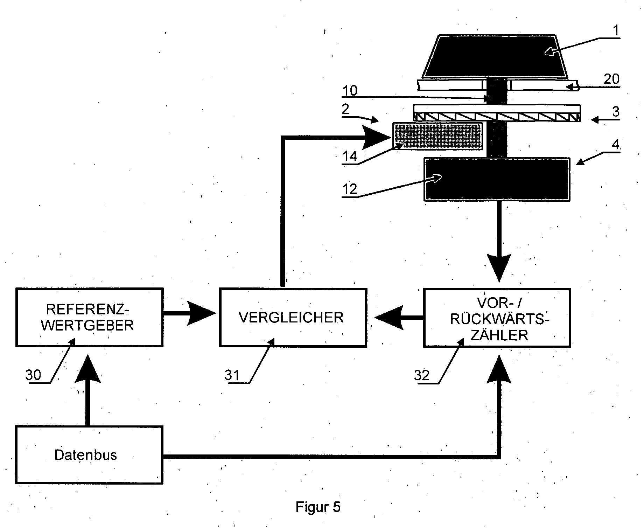

In Fig. 5 sind in Form eines Blockschaltbilds diejenigen Teile einer Steuerschaltung dargestellt, die zur Zusammenarbeit mit dem oben beschriebenen Inkrementaldrehgeber 4 dienen. Der dargestellte Teil der Steuerschaltung besteht im wesentlichen aus einem Referenzwertgeber 30, einem Vergleicher 31 und einem Vor-/Rückwärtszähler 32. Die nachstehende Erläuterung bezieht sich auf die Einstellung der Geschwindigkeit einer Lokomotive in einer Modelleisenbahnanlage.

Der Vor-/Rückwärtszähler 32 ist mit dem Ausgang der Impulserzeugungseinrichtung 12 des Inkrementaldrehgebers 4 verbunden und dient zur Speicherung des gerade aktuellen Absolutwertes oder Sollwertes der Geschwindigkeit. Der Vor-/Rückwärtszähler 32 spricht in an sich bekannter Weise auf die drehrichtungsabhängigen Impulse der Impulserzeugungseinrichtung 12 durch Vorwärts- oder Rückwärtszählen in einer solchen Weise an, daß der Zählerwert einem gerade gewünschten absoluten Geschwindigkeitswert bzw. einer gewünschten Geschwindigkeitsstufe entspricht.

Im Referenzwertgeber 30 sind beispielsweise zwei Referenzwerte gespeichert, von denen der eine den Geschwindigkeitswert "0" und der andere den maximalen Geschwindigkeitswert darstellt. Im Falle der Verwendung des oben erwähnten. Vor-/Rückwärtszählers liegen diese Referenzwerte als entsprechende Zählerwerte vor.

Der Vergleicher 31 ist in der gezeigten Weise mit den Ausgängen des Referenzwertspeichers 30 und des Vor-/Rückwärtszählers 32 verbunden und vergleicht den gerade aktuellen Absolutwert mit den beiden Referenzwerten. Erreicht der Absolutwert einen der beiden Referenzwerte aktiviert der Vergleicher 31 die Einrückeinrichtung 14 der Blockiereinrichtung 2. Dadurch wird in Abhängigkeit davon, welcher der beiden Referenzwerte erreicht wurde, eine Weiterdrehung des Drehknopfes 1 in der einen oder der anderen Drehrichtung blockiert. Eine Rückdrehung aus der Anschlagstellung ist hingegen in beiden Fällen möglich. Erfolgt eine Rückdrehung, wird dies vom Vergleicher erfasst, und die Einrückeinrichtung wird deaktiviert. Der Drehknopf 1 kann dann wieder in beiden Richtungen gedreht werden.

Die Referenzwerte können im Referenzwertgeber 30 fest gespeichert sein oder über einen Datenbus eingegeben und/oder ausgewählt werden.

Soll der Inkrementdrehgeber 4 zum Einstellen der Geschwindigkeit einer weiteren Lokomotive benutzt werden, kann der eingestellte aktuelle Geschwindigkeitswert der ersten Lokomotive im Vor-/Rückwärtszähler 32 über den oben erwähnten Datenbus durch den (zuvor eingestellten) aktuellen Geschwindigkeitswert der zweiten Lokomotive ersetzt werden und dann mittels des Impulsdrehgebers geändert werden. Gleichermaßen können die zugehörigen Referenzwerte der zweiten Lok über den Datenbus in den Referenzwertgeber 30 eingegeben werden, falls sie sich von denjenigen der ersten Lok unterscheiden.

Alternativ können der Referenzwertgeber und eine dem Vor-/Rückwärtszähler entsprechende Zähl- und Speichereinrichtung auch so ausgelegt sein, daß sie die jeweiligen Werte von zwei Lokomotiven handhaben und speichern können und intern auf Speicherbereiche für die jeweiligen Werte umschaltbar sind. Andere gleichwertige Ausführungen stehen einem Fachmann zur Verfügung.

In einer weiteren Alternative könnte z.B. zwischen der Impulserzeugungseinrichtung 12 und mehreren Zähl- und Speichereinrichtungen ein Selektionsschalter vorgesehen sein. Auch mehrere Referenzwertgeber könnten durch einen Selektionsschalter ausgewählt werden.

Auf diese Weise kann man einen einzigen erfindungsgemäßen Inkrementaldrehgeber mit dynamischem Anschlag zum Einstellen von Schaltstufen oder Werten von zwei oder noch mehr physikalischen Größen mit taktilem Anschlag in einer oder in beiden Drehrichtungen des Drehknopfes und selbstverständlich gleichzeitig auch für Anwendungen ohne Anschlag verwenden. Die Ansteuerung der Steller oder Aktoren ist hier nicht erläutert, da dies einem Fachmann bekannt ist. So könnte man beispielsweise den jeweils gewünschten Betrag einer einzustellenden Größe wie einer Geschwindigkeit dem Vor-/Rückwärtszähler entnehmen.

Die Erfindung ist nicht auf die dargestellten Ausführungsbeispiele beschränkt. Abwandlungen und Modifikationen können von einem Fachmann durchgeführt werden, ohne den Rahmen der Erfindung zu verlassen.

## Patentansprüche

1. Inkrementaldrehgeber mit einer drehbaren Welle (10) und einer mit der Welle zusammenwirkenden Impulserzeugungseinrichtung (12), die beim Drehen der Welle elektrische Impulse liefert, **gekennzeichnet durch**
eine mit der Welle zusammenwirkende Blockiereinrichtung (2), die **durch** ein ihr zuführbares elektrisches Signal in einen aktiven Zustand bringbar ist, in welchem sie eine Weiterdrehung der Welle blockiert.

2. Inkrementaldrehgeber nach Anspruch 1,
**dadurch gekennzeichnet, daß** die Blockiereinrichtung (2) derart ausgebildet ist, daß nur die Weiterdrehung, jedoch nicht eine Drehung in entgegengesetzter Richtung blockiert ist.

3. Inkrementaldrehgeber nach Anspruch 2,
**dadurch gekennzeichnet, daß** die Blockiereinrichtung (2) derart ausgebildet ist, daß sie bei Drehung in entgegengesetzter Richtung in ihren inaktiven Zustand bringbar ist, in welchem Drehungen in beide Richtungen möglich sind.

4. Inkrementaldrehgeber nach einem der vorhergehenden Ansprüche,
**dadurch gekennzeichnet, daß** die Blockiereinrichtung (2) für die beiden Drehrichtungen gesonderte Blockiermittel (7, 8) aufweist.

5. Inkrementaldrehgeber nach einem der vorhergehenden Ansprüche,
**dadurch gekennzeichnet, daß** die Blockiereinrichtung (2) einen mechanischen Anschlag (5) aufweist, der mit der Welle (10) oder mit einem an der Welle angebrachten Teil (3) in Eingriff bringbar ist.

6. Inkrementaldrehgeber nach einem der vorhergehenden Ansprüche,
**dadurch gekennzeichnet, daß** die Blockiereinrichtung (2) elektromagnetisch aktivierbar ist.

7. Inkrementaldrehgeber nach einem der vorhergehenden Ansprüche,
**dadurch gekennzeichnet, daß** die Blockiereinrichtung (2) eine auf der Welle (10) angebrachte gezahnte Scheibe (3) umfaßt.

8. Inkrementaldrehgeber nach einem der vorhergehenden Ansprüche,
**dadurch gekennzeichnet, daß** das elektrische Signal in Abhängigkeit von Impulsen der Impulserzeugungseinrichtung (12) erzeugt ist.

9. Inkrementaldrehgeber nach einem der vorhergehenden Ansprüche,
**dadurch gekennzeichnet, daß** zur Bildung des elektrischen Signals ein in Abhängigkeit von Impulsen der Impulserzeugungseinrichtung (12) erzeugter variabler Absolutwert, der dem gerade aktuellen Wert einer zu beeinflussenden Größe entspricht, mit einem vorgegebenen Referenzwert der Größe verglichen wird.

10. Inkrementaldrehgeber nach einem der vorhergehenden Ansprüche mit einer Steuerschaltung,
**dadurch gekennzeichnet, daß** die Steuerschaltung eine Speicher- und Vergleichseinrichtung (30, 31, 32) aufweist, die mit der Impulserzeugungseinrichtung (12) und der Blockiereinrichtung (2) zusammenarbeitet.
